# EUROPEAN PATENT SPECIFICATION

(11) **EP 3 224 470 B1**
(45) Date of publication and mention of the grant of the patent: **20.03.2019**
(21) Application number: 15790182.8
(22) Date of filing: 21.10.2015
(51) Int. Cl.: F03B 13/26, F03B 17/06

(54) **TIDAL CURRENT POWER GENERATION SYSTEMS WITH CLAMPING ARRANGEMENT**
GEZEITENKRAFTWERK MIT SPANNVORRICHTUNG
USINE MARÉMOTRICE AVEC SYSTÈME DE SERRAGE

(30) Priority: 24.11.2014 GB 201420816
(43) Date of publication of application: 04.10.2017
(73) Proprietor: Tidal Generation Limited, London, W6 8BJ (GB)
(72) Inventor: RHYMES, Jonathan, Bristol BS1 3AG (GB); SMALLWOOD, Ioan, Bristol BS1 3AG (GB); ADCOCK, Thomas, Bristol BS1 3AG (GB)
(74) Representative: Brannen, Joseph Waclaw
(86) International application number: PCT/GB2015/053136
(87) International publication number: WO 2016/083774

(56) References cited:
- EP-A1- 2 383 499
- GB-A- 2 448 710
- GB-A- 2 467 747
- GB-A- 2 504 516
- GB-A- 2 507 730

## Description

The present invention relates to water current power generation systems, and in particular to such systems which employ removable power generation units.

### BACKGROUND TO THE INVENTION

It is widely known that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of turbines to capture the power of water flow, such as tidal, river and ocean current flows is becoming a viable source of alternative energy. The turbine equipment used to capture such water flow energy typically includes a shaft driven generator connected using a drivetrain to a rotor assembly. The rotor assembly includes a plurality of rotor blades that are driven by the water flow, so as to turn an input shaft of the drivetrain.

In order to be economically practical, multiple water current turbine devices need to be deployed in a suitable area. For example, a tidal turbine farm may have tens to hundreds of turbines. The turbines are preferably arranged in an array having multiple rows of multiple turbines. The turbine array could be deployed in a tidal flow area, a river flow, an ocean current, or any other suitable water current area. Although it is preferable for the turbines to be arranged in an array, geography, bathymetry and other factors may mean that a turbine farm has another arrangement.

Such turbine equipment needs to be secured to the bed of a body of water, such as a sea, estuary or river. Conventional underwater turbines used to drive electrical generators are mounted on a horizontal rotational axis and require a significant number of ancillary features, in order to maximise energy capture. One such feature that is essential for efficient energy generation is yaw capability: it should be possible to direct the turbine to the most effective orientation with respect to the direction of current flow at any particular time.

Installation, maintenance and servicing of underwater power generation apparatus, particularly in deep sea environments, are highly costly and time consuming procedures. It is therefore desirable to simplify the construction and deployment of underwater power generation apparatus, lowering capital cost and reducing the frequency with which in service intervention is required. An example of a prior art clamp may be found in UK Patent Application Publication Number GB 2467747 A.

The requirement for provision of a retrievable power generation unit that can be oriented appropriately for the flow conditions leads to the need for a solution that can clamp the power generation unit to the support structure, whilst having respective positions for generation, removal and rotation.

It is desirable to provide a clamp solution that provides these three positions, whilst enabling desirably speedy transition between the positions.

### SUMMARY OF THE INVENTION

According to one aspect of the present invention, there is provided an underwater power generating system comprising a power generation unit and a support structure, the power generation unit having a mounting portion which is releasably engageable with a support portion of the support structure, and a clamp arrangement for clamping the mounting portion to the support portion, and having an open position in which the mounting portion is removable from the support portion, a closed position in which the mounting portion is fixed relative to the support portion, and a bearing position in which the mounting portion is rotatable relative to the support portion and is not removable from the support portion, the clamp arrangement comprising first and second clamp portions, and an actuation mechanism arranged between the first and second clamp portions, and operable to move the first and second clamp portions between the open position, the bearing position and the closed position of the clamp arrangement, wherein the actuation mechanism includes a first actuator operable to move the clamp arrangement between the open and bearing positions, and a second actuator operable to move the clamp arrangement between the bearing and closed positions, the second actuator being adapted to move into an over-centre locked position in the closed position.

According to another aspect of the present invention, there is provided a clamp arrangement for an underwater power generating system which includes a power generation unit and a support structure, the power generation unit having a mounting portion which is releasably engageable with a support portion of the support structure, and a clamp arrangement for clamping the mounting portion to the support portion, and having an open position in which the mounting portion is removable from the support portion, a closed position in which the mounting portion is fixed relative to the support portion, and a bearing position in which the mounting portion is rotatable relative to the support portion and is not removable from the support portion, the clamp arrangement comprising first and second clamp portions, and an actuation mechanism arranged between the first and second clamp portions, and operable to move the first and second clamp portions between an open position, a bearing position and a closed position, and including a first actuator operable to move the clamp arrangement between the open and bearing positions, and a second actuator operable to move the clamp arrangement between the bearing and closed positions, the second actuator being adapted to move into an over-centre locked position in the closed position.

In one example, the first actuator is attached to the first clamp portion and is rotatable with respect to the first clamp portion about a first axis, the actuation mechanism includes an actuator mounting portion attached to the second clamp portion and rotatable about the second clamp portion about a second axis, the first actuator is attached to the actuator mounting portion and is rotatable about the mounting portion about a third axis spaced from the second axis, the second actuator is attached to the actuator mounting portion and is rotatable about the mounting portion about a fourth axis spaced apart from the second axis and form the third axis, and the first and second axes define a reference line therethrough, and the third axis is to a first side of the reference line in the open and bearing positions, and to a second side of the reference line in the closed position, the first and second sides being to opposite sides of the reference line.

In one example, the actuation mechanism further comprises a link arrangement having a first link pivotally attached to the mounting portion, a second link pivotally connecting the first link to the first clamp portion, and a third link pivotally connecting the first link to the second clamp portion, such that movement of one of the first and second clamp portions results in a substantially corresponding movement in the other of the first and second clamp portions. Such a link arrangement may provide a Watt's Linkage.

In one example, in the open position, the first and second actuators are extended, and wherein, in the bearing position, the first actuator is at least partially retracted and the second actuator is extended, and wherein, in the closed position, the first and second actuators are at least partially retracted.

The first and second actuators may be provided by any suitable combinations of one or more lead screws and/or hydraulic rams. In one particular example, the first actuator is provided by a lead screw device, and the second actuator is provided by a hydraulic ram device.

The power generation unit may be buoyant, or may be heavy (i.e. not buoyant).

### BRIEF DESCRIPTION OF THE DRAWINGS

Figure 1 is a schematic view of a water current power generation system;
Figure 2 is a schematic drawing of a power generation unit for use in the system of Figure 1;
Figure 3 illustrates a connection between a power generation unit and a support structure of the system of Figure 1; and
Figures 4 to 8 illustrate a clamp arrangement embodying the principles of the present invention suitable for use with the system of Figure 1.

### DETAILED DESCRIPTION OF THE PREFERRED EMBODIMENTS

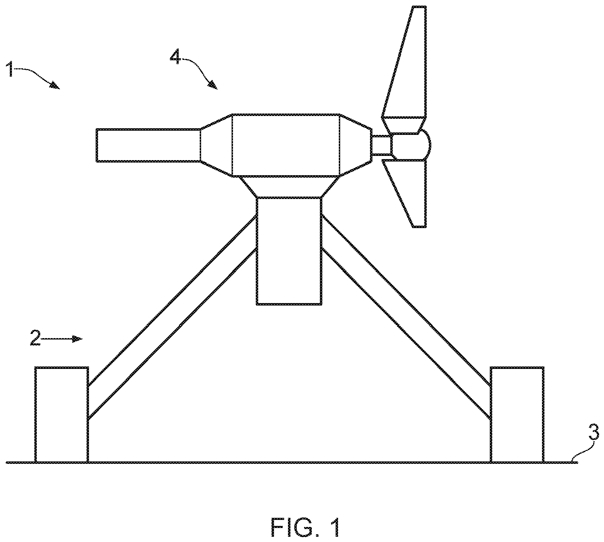

A water current power generation system 1 is shown in Figure 1 and comprises a support structure 2 located on a bed 3 of a body of water. A power generation unit 4, such as a turbine device, is mounted on the support structure 2. In this example, as the water current flows past the power generation unit 4, a rotor assembly turns, thereby driving an electrical generator, or other power converter apparatus, provided in the power generation unit 4. In one example, the power generation unit 4 is buoyant, and is winched down to the support structure 2.

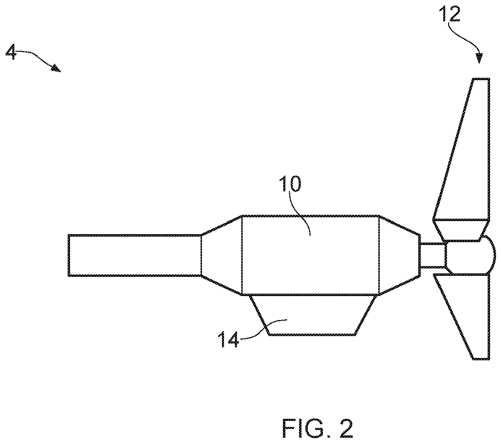

Figure 2 illustrates the power generation unit 4 of Figure 1 in more detail. The power generation unit 4 comprises a main body 10, on which is rotatably mounted a rotor assembly 12. The rotor assembly 12 operates to drive an electricity generator, or other power generation apparatus, housed in the main body 10. The power generation unit 4 is adapted for releasable mounting on the support structure 2, and includes a mount 14 to provide this releasable mounting.

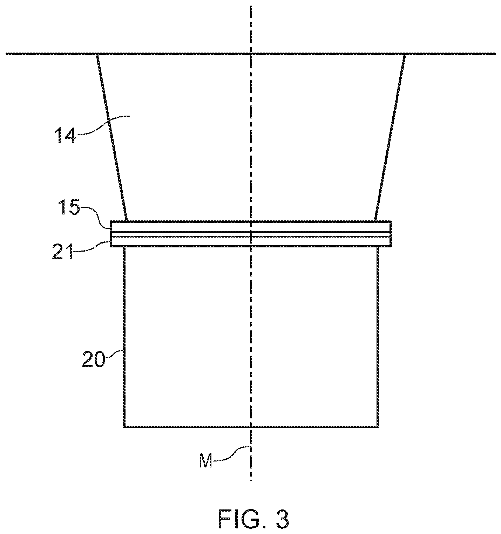

The attachment of the mount 14 to the support structure is shown in more detail in Figure 3. The main body 10, from which the engagement portion 14 extends, is not shown in Figure 3 for the sake of clarity. The mount 14 defines a mounting axis M for the power generating unit 4. In order that the power generation unit 4 is able to rotate with respect to the support structure 2, the mount 14 and the support housing 20 are circular in plan cross section.

The mount 14 has a mounting flange 15 which extends around an outer edge region of the mount 14, and which engages with an associated support flange 21 that extends around an outer edge region of the support housing 20. The mounting and support flanges 15 and 21 allow the power generation unit 4 to be affixed to the support structure 2 in an appropriate manner. Preferably, the power generation unit 4 is substantially rigidly fixed to the support structure 2 during power generation, and is rotatable with respect to the support structure 2 during a re-orientation procedure. Reorientation of the power generation unit 4 is required in order to align the unit into the tidal flow. Since the tidal flow changes direction regularly, as the tide changes, the power generation unit 4 will need reorientation with those changes in tidal flow direction. In contrast to wind turbines which have to track constant changes in wind direction, a tidal flow power generation unit needs only to be reoriented between two positions, since tidal sites have two dominant flow directions.

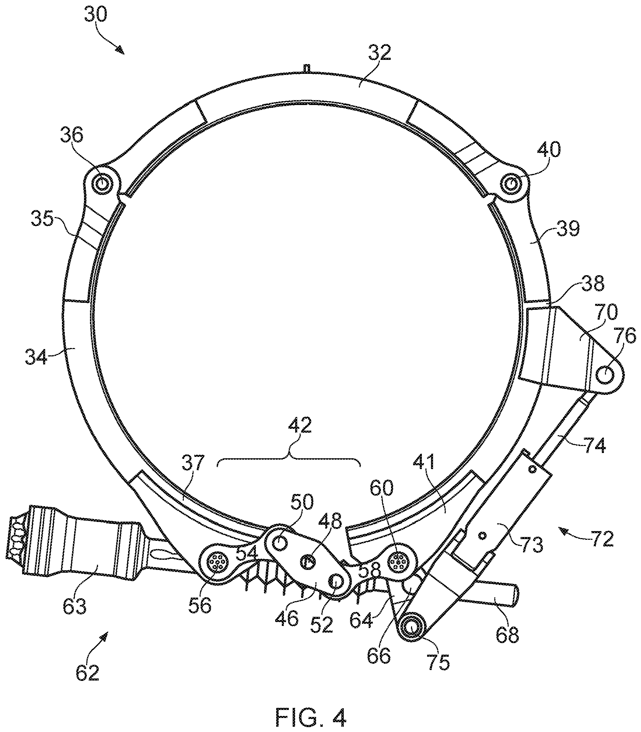

Figures 4 to 8 illustrate a clamp arrangement 30 embodying aspects of the present invention which is able to provide a clamp mounted to hold the mounting flange 15 of the mount 14 to the support flange 21 of the support housing 20. Such a clamp is attached to the mount 14 of the power generation unit 4, and so is retrievable with the power generation unit 4.

Figure 4 illustrates the clamp arrangement 30 in an open configuration. In this open configuration, the power generation unit 4 can be removed from the support structure 2. The clamp arrangement 30 comprises a central clamp portion 32, and first and second clamp portions 34 and 38. The clamp portions 32, 34 and 38 are arcuate in form and are linked together to form a substantially circular clamp for engagement around the mounting flange 15 and the support flange 21. The clamp portions 32, 34 and 38 have engagement surfaces that are able to engage with an upper surface of the mounting flange 15 and a lower surface of the support flange 21, thereby holding the flanges into contact with one another.

The first clamp portion 34 is attached at one end region 35 thereof to a first end region of the central clamp portion 32 by way of a first hinge 36. The first hinge 36 enables the first clamp portion 34 to rotate with respect to the central clamp portion 32. The first clamp portion 34 extends from the first end region 35 to a second end region 37, such that the first clamp portion 34 extends from the central clamp portion 32 to an actuation region 42 of the clamp arrangement 30.

Similarly, the second clamp portion 38 is attached at one end region 39 thereof to a second end region of the central clamp portion 32 by way of a second hinge 40. The second hinge 40 enables the second clamp portion 38 to rotate with respect to the central clamp portion 32. The second clamp portion 38 extends from the central clamp portion 32 to a second end region 41, such that the second clamp portion 38 extends from the central clamp portion 32 to the actuation region 42.

Such a configuration enables the clamp arrangement 30 to be moved between the three required positions: open, bearing and closed, by moving the first and second clamp portions 34 and 38 with respect to the central clamp portion 32.

The second end regions 37 and 39 of the first and second clamp portions 34 and 38 are adjacent one another in the actuation region 42, and are spaced apart by a first distance in the open position of the clamp arrangement, by a second distance in the bearing position of the clamp, and by a third distance in the closed position of the clamp. The first distance is greater than the second distance, and the second distance is greater than the third distance.

In order to move the clamp arrangement 30 between the three required positions, an actuation mechanism 44 is provided. The actuation mechanism 44 connects respective second end regions of the first and second clamp portions 34 and 38, and is operable to move the second end regions 37 and 41 of the first and second clamp portions 34 and 38 relative to one another. Such movement causes the clamp arrangement 30 to be moved between the three positions mentioned above.

The actuation mechanism 44 includes a number of pivotable links, and a pair of actuators. A first link 46 is rotatably mounted by way of a first locating feature 48 on the upper surface of the mounting flange 15 of the mount 14 of the power generation unit 4. The first link 46 is rotatable with respect to the mounting portion 14, and with respect to the clamp portions 32, 34 and 38. The first link 46 is provided with second and third locating features 50 and 52. The second and third locating features 50 and 52 are arranged to be opposite one another with respect to the first locating feature 48. The second and third locating features may advantageously be provided by respective pins.

A second link 54 extends between the first link 46 and the second end region 37 of the first clamp portion 34. The second link 54 is attached to the first link 46 by way of the second locating feature 50, and is rotatable about that feature 50 with respect to the first link 46. The second link 54 is rotatably attached to the first clamp portion 34 by a fourth locating feature 56, for example by means of a pin or bolt.

A third link 58 extends between the first link 46 and the second end region 41 of the second clamp portion 38. The third link 58 is attached to the first link 46 by way of the third locating feature 52, and is rotatable about that feature 52 with respect to the first link 46. The third link 58 is rotatably attached to the second clamp portion 38 by a fifth locating feature 60, for example by means of a pin or bolt.

Such an arrangement means that, as one of the first and second clamp portions 34 and 38 rotates about the respective hinge 36 and 40, the other of the clamp portions 34 and 36 is caused to move in a corresponding manner. It will be appreciated that the first, second and third links 46, 54 and 58 act as a Watt's Linkage. Such symmetric movement of the first and second clamp portions 34 and 38 is required to ensure that the clamp arrangement moves between the three positions in an appropriate manner.

A first actuator 62, in this example a lead screw actuator, includes a body portion 63 which is attached to the second end region 37 of the first clamp portion 34. The first actuator 62 is rotatable with respect to the first clamp portion 34 about an axis coincident with the fourth locating feature 56, such that, in this example, the first actuator 62 and second link 54 are rotatable with respect to the first clamp portion 34 about a single axis defined by the fourth locating feature 56.

An actuator mounting portion 64 is attached to the second end region 41 of the second clamp portion 38. The actuator mounting portion 64 is rotatable with respect to the second clamp portion 38 about an axis coincident with the fifth locating feature 60, such that the actuator mounting portion 64 and second link 58 are rotatable with respect to the second clamp portion 38 about a single axis defined by the fifth locating feature 60. The actuator mounting portion 64 defines a first actuator mounting feature 66 to which the first actuator 62 is attached.

The first actuator 62 includes an actuation member 68 which extends from the body portion 63. In the case of a lead screw actuator, this actuation member is a threaded elongate member. The actuation member 68 is rotatably attached to the actuator mounting portion 64 by way of the first actuator mounting feature 66. The first actuator mounting feature 66 is offset on the actuator mounting portion 64 from the fifth locating feature 60, such that the first actuator 62 is rotatable with respect to the actuator mounting portion 64 and the second clamp portion 38 about an axis defined by the first actuator mounting feature 66 and offset from that defined by the fifth locating feature 60.

The first actuator mounting feature 66 cooperates with the actuation member 68 of the first actuator 62, so that operation of the first actuator 62 causes the actuator mounting portion 64 to move with respect to the actuation member 68. In the case of a lead screw actuator, the first actuator mounting feature 66 is a threaded component that engages with the threaded actuation member 68 of the first actuator 62. As this actuation member 68 is rotated, the actuator mounting portion 64 is moved linearly along the actuation member 68.

This arrangement of the first actuator 62 and the various links and locating features described above allows the first actuator to change the relative positions of the first and second clamp portions 34 and 38. As the first actuator 62 lengthens, by movement of the actuation member 68 out of the body 63, the second end regions 37 and 41 of the first and second clamp portions 34 and 38 are moved apart. As the first actuator 62 shortens, by movement of the actuation member 68 into the body 63, the second end regions 37 and 41 of the first and second clamp portions 34 and 38 are moved toward one another. Operation of the clamp arrangement 30 will be described in more detail below.

A second actuator 72, including a body portion 73 and an actuation member 74, is rotatably attached to the actuator mounting portion 64 by way of a second actuator mounting feature 75. The second actuator mounting feature 75 is offset from the first actuator mounting feature 66, such that the second actuator mounting feature 75 is to an opposite side of the first actuator mounting feature 66 than the fifth locating feature 60. The body portion 73 of the second actuator 72 is rotatable with respect to the actuator mounting portion 64 about an axis defined by the second actuator mounting feature 75.

The actuation member 74 of the second actuator 72 extends from the body 73 of the second actuator 72, and is movable linearly with respect to the body 73. In this example, the second actuator 72 is provided by a hydraulic ram. A distal end of the actuation member 74 of the second actuator 72 is rotatably attached to the second clamp portion 38 by way of a sixth locating feature 76. The sixth locating feature 76 may be provided on a bracket 70 attached to the second clamp portion 38. The second actuator 72 is thus rotatable with respect to the second clamp portion 38 about an axis defined by the sixth locating feature 76.

As the second actuator 72 shortens, then the actuator mounting portion 64 is caused to rotate about the first actuator mounting feature, such that the fifth locating feature 60 is rotated towards the first clamp portion 34. As the second actuator 72 extends, then the actuator mounting portion 64 is caused to rotate about the first actuator mounting feature, such that the fifth locating feature 60 is rotated away from the first clamp portion 34.

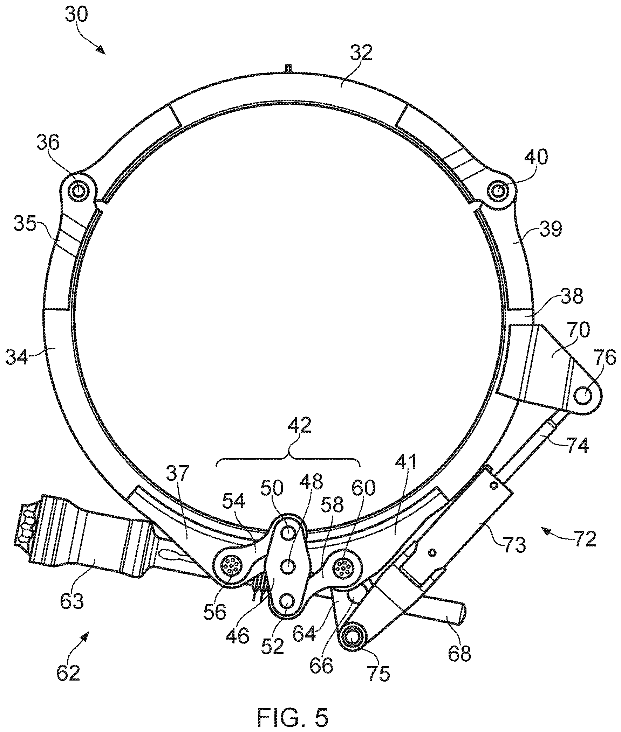

Figure 4 illustrates the clamp arrangement 30 in an open position. In this position, the ends of the first and second clamp portions 34 and 38 are separated by a first distance L_{O}. In order to move to the bearing position shown in Figure 5, the first actuator 62 is operated so that the first actuator mounting feature 66 is moved towards the body 63 of the first actuator 62. In the case of a lead screw providing the first actuator, this operation comprises turning the actuation member 68, thereby causing the actuator mounting portion 64 to move along the actuation member of the 68 of the first actuator 62.

This movement of the actuator mounting portion 64 causes the second clamp portion 38 to rotate about the second hinge 40, such that the second end region 41 of the second clamp portion 38 moves towards the first clamp portion 34. This movement in turn causes the second link 58 to be actuated, since the fifth locating feature 60 is moved towards the first clamp portion 34. This actuation of the second link 58 causes the Watt's Linkage provided by the first, second and third links 46, 54 and 58 to move, thereby causing the first clamp portion 34 to rotate about the first hinge 36, such that the second end region 37 of the first clamp portion 34 moves towards the second clamp portion 38.

The first actuator 62 is operated until the clamp arrangement 30 reaches the bearing position as illustrated in Figure 5. In the bearing position, the clamp arrangement 30 exerts a first clamping force on the mounting flange 15 and the support flange 21, such that the power generation unit 4 is rotatable about the support structure 2, but is not removable from the support structure 2. In this position, respective ends of the second and second clamp portion 34 and 38 are separated by a second distance L_{B}. This second distance L_{B} is smaller than the first distance L_{O} of the open position of the clamp arrangement 30. In the bearing position, the first actuator 62 has a length shorter than when in the open positon of Figure 4. The second actuator 72 remains extended and is not actuated to move between the open and bearing positions of the clamp arrangement 30.

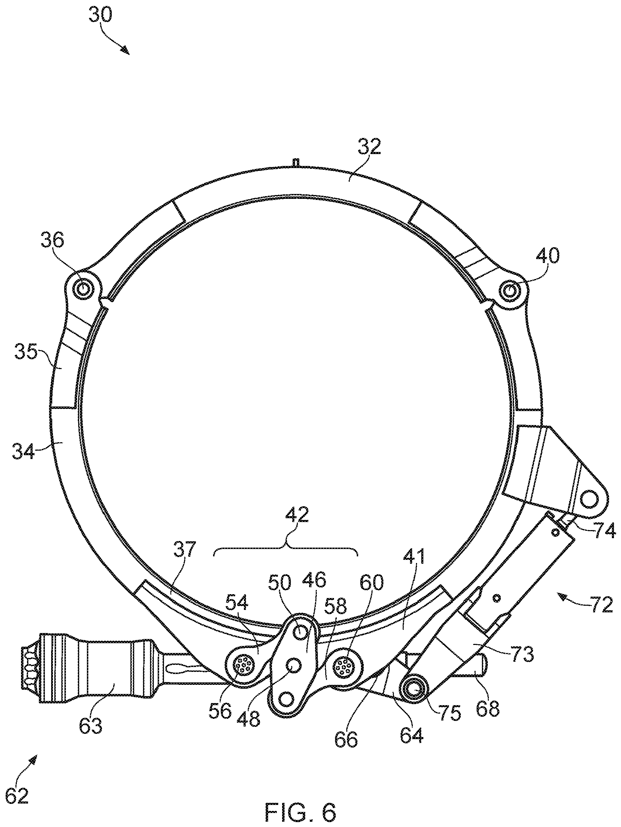

Figure 6 illustrates a fully closed position of the clamp arrangement 30. In order to reach the fully closed position of Figure 6 from the bearing position of Figure 5, the second actuator 72 is operated. The second actuator 72 is shortened, so that the actuator mounting portion 64 is caused to rotate about the first actuator mounting feature 66, such that the fifth locating feature 60 is rotated towards the first clamp portion 34. This rotation causes the first clamp portion 38 to rotate about the second hinge 40, such that the second end region of the first clamp portion 38 moves towards the second end region 37 of the first clamp portion 34.

This movement of the second actuator 72 causes the clamp arrangement 30 to exert a second clamping force on the on the mounting flange 15 and the support flange 21, such that the power generation unit 4 is not rotatable about the support structure 2, and is not removable from the support structure 2. In this position, respective ends of the first and second clamp portion 34 and 38 are separated by a third distance L_{C}. This third distance L_{C} is smaller than the second distance L_{B} of the bearing position of the clamp arrangement 30. In the bearing position, the second actuator 72 has a length shorter than when in the bearing positon of Figure 5.

In order to help prevent unwanted movement of the clamp arrangement 30 from the closed position of Figure 6 to the bearing position of Figure 5, the second actuator is operated to cause the clamp arrangement 30 to reach an "over-centre" position. This over centre position means that the first actuator mounting feature 66 passes a reference straight line which passes through the fourth locating feature 56 and the fifth locating feature 60. The first actuator 62 is provided with a predetermined amount of resilience in order that the clamp arrangement 30 can reach this over centre closed position. The resilience may be provided in any suitable manner, for example by the provision of Bellville washers in the body 63 of the first actuator.

The components of the clamp arrangement 30 are sized such that as the clamp arrangement 30 reaches the closed position (that is, the clamp portions engage with the mounting and support flanges at a desired position), the central axis of the first actuator mounting feature 66 reaches the reference line. The resilience of the first actuator 62 enables the second actuator 72 to continue to shorten, in order that the first actuator mounting feature 66 is moved past the reference line. The resilience of the first actuator 62 then holds the clamp arrangement in this over centre position.

This over centre position means that the force required to move the clamp arrangement 30 from the closed position to the bearing position is only achievable with operation of one or both of the first and second actuators 62 and 72, and will not be overcome by operation of the power generation unit 4 or the movement thereof when in use.

In order to move from the closed position of Figure 6 to the bearing position of Figure 5, the second actuator 72 is operated, such that it extends, thereby rotating the actuator mounting portion 64 about the first actuator mounting feature 66. This rotation in turn causes the second clamp portion 38 to rotate about the second hinge 40. The Watt's Linkage formed by the first, second and third links 46, 54 and 58 is actuated, thereby causing the first clamp portion to rotate about the first hinge 36. In this way, the first and second clamp portions 34 and 38 are moved apart to the bearing position. The Watt's Linkage also serves to ensure that the central clamp portion 32 is moved outwardly from the closed position to the bearing positon.

In order to move from the bearing position of Figure 5 to the open position of Figure 4, the first actuator 62 is operated, such that the first actuator mounting feature 66 is moved away from the body 63 of the first actuator 62. The actuator mounting portion 64 is thereby rotated about the first actuator mounting feature 66. This rotation in turn causes the second clamp portion 38 to rotate about the second hinge 40. The Watt's Linkage formed by the first, second and third links 46, 54 and 58 is actuated, thereby causing the first clamp portion to rotate about the first hinge 36. In this way, the first and second clamp portions 34 and 38 are moved apart to the open position. The Watt's Linkage also serves to ensure that the central clamp portion 32 is moved outwardly from the bearing position to the open positon.

For installation, the clamp arrangement 30 is placed in the open position for deployment of the power generation unit 4 to the support structure 2. When the power generation unit 4 is located on the support structure 2, then the clamp arrangement is moved from the open position to the closed position via the bearing position in order to lock the unit 4 to the support structure 2.

During use, the clamp arrangement 30 is moved between the closed and bearing positions. The closed position is used during power generation, and the bearing position is used during re-orientation of the power generation unit 4 to account for changes in flow direction.

During retrieval of the power generation unit 4, the clamp arrangement 30 is placed in the open position.

As described above, the first actuator is preferably provided by a lead screw actuator. Such an actuator is appropriate for moving the clamp arrangement 30 from the open position to the bearing position, because the loads on the actuator are relatively low, and a lead screw maintains its position without the need for additional or continuous power (electrical or hydraulic). The second actuator 72 is preferably provided by a hydraulic ram actuator, since the movement from the bearing position to the over-centre closed position requires application of relatively high force. A hydraulic ram is suited to providing the required level of actuation force, but may suffer from force reduction over time. The over-centre position of the clamp arrangement 30 allows such a hydraulic ram to be used by ensuring that a reduction in force applied by the ram is not enough to move the clamp arrangement 30 past the over centre position. Only positive actuation of the first or second actuator provides sufficient force to overcome the over centre position.

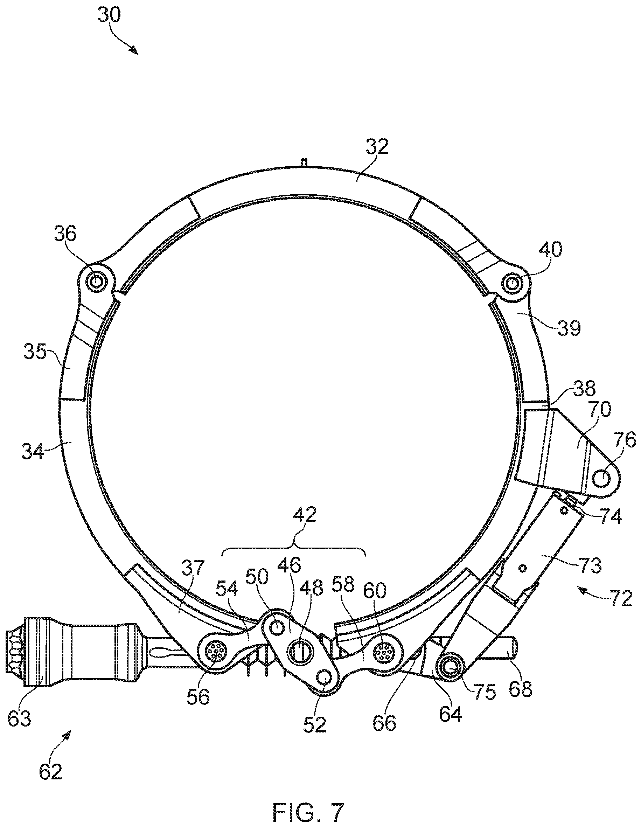

Figure 7 illustrates a first contingency operation for the clamp arrangement 30. This first contingency operation is intended to enable the clamp arrangement 30 to be moved from the closed position (Figure 6) to the open position (Figure 4) in the event that the second actuator 72 fails in the closed position. In order that the power generation unit 4 can be retrieved from the support structure 2, the first actuator 62 is operated in order to open the clamp arrangement 30. The second actuator 72 remains in its closed position.

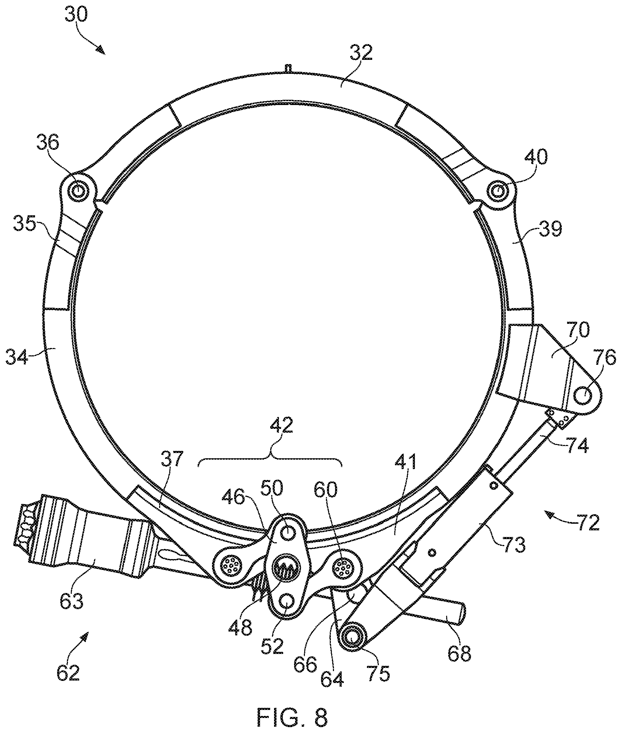

Figure 8 illustrates a second contingency operation for the clamp arrangement 30. This second contingency operation is intended to enable the clamp arrangement to be moved from the bearing position to the closed position in the event that the second actuator fails in the bearing positon. The first actuator 62 is provided with additional travel, in order that it is able to bring the clamp portions into a position that provides sufficient clamping force for the mounting and support flanges. The clamp arrangement 30 is not brought into the over-centre closed position, since the second actuator 72 has not been closed. However, the power generation unit 4 is secured until it can be retrieved from the support structure 2.

Although the embodiment described above includes three clamp portions, it will be readily appreciated that a clamp arrangement embodying aspects of the present invention may include any appropriate number of clamp portions, for example two or four clamp portions. Also, the actuators may be provided by any suitable actuators or actuation systems, and are not restricted to the lead screw and hydraulic ram examples described above.

## Claims

1. An underwater power generating system (1) comprising:
a power generation unit (4) and a support structure (2), the power generation unit (4) having a mounting portion which is releasably engageable with a support portion of the support structure (2); and
a clamp arrangement (30) for clamping the mounting portion to the support portion, and having an open position in which the mounting portion is removable from the support portion, a closed position in which the mounting portion is fixed relative to the support portion, and a bearing position in which the mounting portion is rotatable relative to the support portion and is not removable from the support portion, the clamp arrangement (30) comprising first (34) and second (38) clamp portions, and an actuation mechanism arranged between the first (34) and second (38) clamp portions, and operable to move the first (34) and second (38) clamp portions between the open position, the bearing position and the closed position of the clamp arrangement (30),
wherein the actuation mechanism includes a first actuator (62) operable to move the clamp arrangement (30) between the open and bearing positions, **characterised in that** the actuation mechanism further comprises a second actuator (72) operable to move the clamp arrangement (30) between the bearing and closed positions, the second actuator (72) being adapted to move into an over-centre locked position in the closed position.

2. A system (1) as claimed in claim 1, wherein:
the first actuator (62) is attached to the first clamp portion (34) and is rotatable with respect to the first clamp portion (34) about a first axis;
the actuation mechanism includes an actuator mounting portion (64) attached to the second clamp portion (38) and rotatable about the second clamp portion (38) about a second axis;
the first actuator (62) is attached to the actuator mounting portion (64) and is rotatable about the mounting portion about a third axis spaced from the second axis;
the second actuator (72) is attached to the actuator mounting portion (64) and is rotatable about the mounting portion about a fourth axis spaced apart from the second axis and from the third axis,
wherein the first and second axes define a reference line therethrough, and the third axis is to a first side of the reference line in the open and bearing positions, and to a second side of the reference line in the closed position, the first and second sides being to opposite sides of the reference line.

3. A system (1) as claimed in claim 2, wherein the actuation mechanism further comprises a link arrangement having a first link pivotally attached to the mounting portion, a second link pivotally connecting the first link to the first clamp portion (34), and a third link pivotally connecting the first link to the second clamp portion (38), such that movement of one of the first and second clamp portions results in a substantially corresponding movement in the other of the first (34) and second (38) clamp portions.

4. A system (1) as claimed in claim 3, wherein the link arrangement provides a Watt's Linkage.

5. A system (1) as claimed in any one of the preceding claims, wherein, in the open position, the first (62) and second (72) actuators are extended, and wherein, in the bearing position, the first actuator (62) is at least partially retracted and the second actuator (72) is extended, and wherein, in the closed position, the first (62) and second (72) actuators are at least partially retracted.

6. A system (1) as claimed in any one of the preceding claims, wherein the first actuator (62) is provided by a lead screw device, and the second actuator (72) is provided by a hydraulic ram device.

7. A clamp arrangement (30) for an underwater power generating system (1) which includes a power generation unit (4) and a support structure (2), the power generation unit (4) having a mounting portion which is releasably engageable with a support portion of the support structure (2), said clamp arrangement (30) being configured to clamp the mounting portion to the support portion, and having an open position in which the mounting portion is removable from the support portion, a closed position in which the mounting portion is fixed relative to the support portion, and a bearing position in which the mounting portion is rotatable relative to the support portion and is not removable from the support portion, said clamp arrangement (30) comprising:
first (34) and second (38) clamp portions; and
an actuation mechanism arranged between the first (34) and second (38) clamp portions, and operable to move the first (34) and second (38) clamp portions between an open position, a bearing position and a closed position, and including a first actuator (62) operable to move the clamp arrangement between the open and bearing positions, and a second actuator (72) operable to move the clamp arrangement between the bearing and closed positions, the second actuator (72) being adapted to move into an over-centre locked position in the closed position.

8. A clamp arrangement (30) as claimed in claim 7, wherein:
the first actuator (62) is attached to the first clamp portion (34) and is rotatable with respect to the first clamp portion (34) about a first axis;
the actuation mechanism includes an actuator mounting portion (64) attached to the second clamp portion (38) and rotatable about the second clamp portion (38) about a second axis;
the first actuator (62) is attached to the actuator mounting portion (64) and is rotatable about the mounting portion about a third axis spaced from the second axis;
the second actuator (72) is attached to the actuator mounting portion (64) and is rotatable about the mounting portion about a fourth axis spaced apart from the second axis and from the third axis,
wherein the first and second axes define a reference line therethrough, and the third axis is to a first side of the reference line in the open and bearing positions, and to a second side of the reference line in the closed position, the first and second sides being to opposite sides of the reference line.

9. A clamp arrangement (30) as claimed in claim 8, wherein the actuation mechanism further comprises a link arrangement having a first link adapted for pivotal attachment to a mounting portion of such a power generating unit (4), a second link pivotally connecting the first link to the first clamp portion (34), and a third link pivotally connecting the first link to the second clamp portion (38), such that movement of one of the first (34) and second (38) clamp portions results in a substantially corresponding movement in the other of the first (34) and second (38) clamp portions.

10. A clamp arrangement (30) as claimed in claim 9, wherein the link arrangement provides a Watt's Linkage.

11. A clamp arrangement (30) as claimed in any one of claims 8 to 10, wherein, in the open position, the first (62) and second (72) actuators are extended, and wherein, in the bearing position, the first actuator (62) is at least partially retracted and the second actuator (72) is extended, and wherein, in the closed position, the first (62) and second (72) actuators are at least partially retracted.

12. A clamp arrangement (30) as claimed in any one of claims 8 to 11, wherein the first actuator (62) is provided by a lead screw device, and the second actuator (72) is provided by a hydraulic ram device.

## Patentansprüche

1. Unterwasserstromerzeugungssystem (1), umfassend:
eine Stromerzeugungseinheit (4) und eine Trägerstruktur (2), wobei die Stromerzeugungseinheit (4) einen Montageabschnitt aufweist, welcher lösbar mit einem Trägerabschnitt der Trägerstruktur (2) in Eingriff gebracht werden kann; und
eine Klemmanordnung (30) zum Klemmen des Montageabschnitts an den Trägerabschnitt und eine offene Position, in welcher der Montageabschnitt von dem Trägerabschnitt lösbar ist, eine geschlossene Position, in welcher der Montageabschnitt relativ zu dem Trägerabschnitt fixiert ist, und eine Lagerposition, in welcher der Montageabschnitt relativ zu dem Trägerabschnitt drehbar ist und nicht von dem Trägerabschnitt lösbar ist aufweisend, wobei die Klemmanordnung (30) erste (34) und zweite (38) Klemmabschnitte und einen Betätigungsmechanismus zwischen dem ersten (34) und zweiten (38) Klemmabschnitt angeordnet umfasst, und betrieben werden kann, um den ersten (34) und zweiten (38) Klemmabschnitt zwischen der offenen Position, der Lagerposition und der geschlossenen Position der Klemmanordnung (30) zu bewegen,
wobei der Betätigungsmechanismus einen ersten Aktuator (62) beinhaltet, der betrieben werden kann, um die Klemmanordnung (30) zwischen der offenen Position und der Lagerposition zu bewegen, **dadurch gekennzeichnet, dass** der Betätigungsmechanismus weiter einen zweiten Aktuator (72) umfasst, der betrieben werden kann, um die Klemmanordnung (30) zwischen der Lagerposition und geschlossenen Position zu bewegen, wobei der zweite Aktuator (72) dazu ausgelegt ist, sich in der geschlossenen Position in eine verriegelte Totpunktposition zu bewegen.

2. System (1) nach Anspruch 1, wobei:
der erste Aktuator (62) an dem ersten Klemmabschnitt (34) befestigt ist und bezüglich des ersten Klemmabschnitts (34) um eine erste Achse drehbar ist;
der Betätigungsmechanismus einen an dem zweiten Klemmabschnitt (38) befestigten und um den zweiten Klemmabschnitt (38) um eine zweite Achse drehbaren Aktuatormontageabschnitt (64) beinhaltet;
der erste Aktuator (62) an dem Aktuatormontageabschnitt (64) befestigt ist und um eine dritte, von der zweiten Achse beabstandete Achse um den Montageabschnitt drehbar ist;
der zweite Aktuator (72) an dem Aktuatormontageabschnitt (64) befestigt ist und um eine vierte, von der zweiten Achse und von der dritten Achse beabstandete Achse um den Montageabschnitt drehbar ist,
wobei die erste und die zweite Achse eine Referenzlinie dorthindurch definieren und die dritte Achse sich in der offenen Position und der Lagerposition auf einer ersten Seite der Referenzlinie befindet und sich in der geschlossenen Position auf einer zweiten Seite der Referenzlinie befindet, wobei sich die erste und zweite Seite an gegenüberliegenden Seiten der Referenzlinie befinden.

3. System (1) nach Anspruch 2, wobei der Betätigungsmechanismus weiter eine Bindegliedanordnung mit einem ersten schwenkbar an dem Montageabschnitt befestigten Bindeglied, einem zweiten Bindeglied, das das erste Bindeglied schwenkbar mit dem ersten Klemmabschnitt (34) verbindet, und einem dritten Bindeglied, das das erste Bindeglied schwenkbar mit dem zweiten Klemmabschnitt (38) verbindet, umfasst, sodass Bewegung von einem von dem ersten und zweiten Klemmabschnitt in einer im Wesentlichen entsprechenden Bewegung in dem anderen des ersten (34) und zweiten (38) Klemmabschnitts resultiert.

4. System (1) nach Anspruch 3, wobei die Bindegliedanordnung ein Wattgestänge bereitstellt.

5. System (1) nach einem der vorstehenden Ansprüche, wobei der erste (62) und zweite (72) Aktuator in der offenen Position ausgefahren sind und wobei der erste Aktuator (62) in der Lagerposition mindestens teilweise zurückgezogen ist und der zweite Aktuator (72) ausgefahren ist, und wobei der erste (62) und zweite (72) Aktuator in der geschlossenen Position mindestens teilweise zurückgezogen sind.

6. System (1) nach einem der vorstehenden Ansprüche, wobei der erste Aktuator (62) durch eine Führungsschraubenvorrichtung bereitgestellt wird und der zweite Aktuator (72) durch eine hydraulische Nachdrückvorrichtung bereitgestellt wird.

7. Klemmanordnung (30) für ein Unterwasserstromerzeugungssystem (1), welches eine Stromerzeugungseinheit (4) und eine Trägerstruktur (2) beinhaltet, wobei die Stromerzeugungseinheit (4) einen Montageabschnitt aufweist, welcher lösbar mit einem Trägerabschnitt der Trägerstruktur (2) in Eingriff gebracht werden kann, wobei die Klemmanordnung (30) konfiguriert ist, um den Montageabschnitt an den Trägerabschnitt zu klemmen und eine offene Position, in welcher der Montageabschnitt von dem Trägerabschnitt lösbar ist, eine geschlossene Position, in welcher der Montageabschnitt relativ zu dem Trägerabschnitt fixiert ist, und eine Lagerposition, in welcher der Montageabschnitt relativ zu dem Trägerabschnitt drehbar ist und nicht von dem Trägerabschnitt lösbar ist, aufweist, wobei die Klemmanordnung (30) umfasst:
erste (34) und zweite (38) Klemmabschnitte; und
einen Betätigungsmechanismus, der zwischen dem ersten (34) und zweiten (38) Klemmabschnitt angeordnet ist und betrieben werden kann, um den ersten (34) und zweiten (38) Klemmabschnitt zwischen einer offenen Position, einer Lagerposition und einer geschlossenen Position zu bewegen, und beinhaltend einen ersten Aktuator (62), der betrieben werden kann, um die Klemmanordnung zwischen der offenen Position und der Lagerposition zu bewegen, und einen zweiten Aktuator (72), der betrieben werden kann, um die Klemmanordnung zwischen der Lagerposition und geschlossenen Position zu bewegen, wobei der zweite Aktuator (72) dazu ausgelegt ist, sich in der geschlossenen Position in eine verriegelte Totpunktposition zu bewegen.

8. Klemmanordnung (30) nach Anspruch 7, wobei:
der erste Aktuator (62) an dem ersten Klemmabschnitt (34) befestigt ist und bezüglich des ersten Klemmabschnitts (34) um eine erste Achse drehbar ist;
der Betätigungsmechanismus einen an dem zweiten Klemmabschnitt (38) befestigten und um den zweiten Klemmabschnitt (38) um eine zweite Achse drehbaren Aktuatormontageabschnitt (64) beinhaltet;
der erste Aktuator (62) an dem Aktuatormontageabschnitt (64) befestigt ist und um eine dritte, von der zweiten Achse beabstandete Achse um den Montageabschnitt drehbar ist;
der zweite Aktuator (72) an dem Aktuatormontageabschnitt (64) befestigt ist und um eine vierte, von der zweiten Achse und von der dritten Achse beabstandete Achse um den Montageabschnitt drehbar ist,
wobei die erste und die zweite Achse eine Referenzlinie dorthindurch definieren und die dritte Achse sich in der offenen Position und Lagerposition auf einer ersten Seite der Referenzlinie befindet und sich in der geschlossenen Position auf einer zweiten Seite der Referenzlinie befindet, wobei sich die erste und die zweite Seite an gegenüberliegenden Seiten der Referenzlinie befinden.

9. Klemmanordnung (30) nach Anspruch 8, wobei der Betätigungsmechanismus weiter eine Bindegliedanordnung mit einem ersten Bindeglied, das zur schwenkbaren Befestigung an einen Montageabschnitt einer solchen Stromerzeugungseinheit (4) ausgelegt ist, einem zweiten Bindeglied, das das erste Bindeglied schwenkbar mit der ersten Klemmabschnitt (34) verbindet, und einem dritten Bindeglied, das das erste Bindeglied schwenkbar mit dem zweiten Klemmabschnitt (38) verbindet, umfasst, sodass Bewegung von einem von dem ersten (34) und zweiten (38) Klemmabschnitt in einer im Wesentlichen entsprechenden Bewegung in dem anderen des ersten (34) und zweiten (38) Klemmabschnitts resultiert.

10. Klemmanordnung (30) nach Anspruch 9, wobei die Bindegliedanordnung ein Wattgestänge bereitstellt.

11. Klemmanordnung (30) nach einem der Ansprüche 8 bis 10, wobei der erste (62) und zweite (72) Aktuator in der offenen Position ausgefahren sind und wobei der erste Aktuator (62) in der Lagerposition mindestens teilweise zurückgezogen ist und der zweite Aktuator (72) ausgefahren ist, und wobei der erste (62) und zweite (72) Aktuator in der geschlossenen Position mindestens teilweise zurückgezogen sind.

12. Klemmanordnung (30) nach einem der Ansprüche 8 bis 11, wobei der erste Aktuator (62) durch eine Führungsschraubenvorrichtung bereitgestellt wird und der zweite Aktuator (72) durch eine hydraulische Nachdrückvorrichtung bereitgestellt wird.

## Revendications

1. Système de génération de puissance sous-marin (1) comprenant :
une unité de génération de puissance (4) et une structure de support (2), l'unité de génération de puissance (4) présentant une portion de montage qui est mise en prise de manière libérable avec une portion de support de la structure de support (2) ; et
un agencement de serrage (30) pour le serrage de la portion de montage à la portion de support, et présentant une position ouverte dans laquelle la portion de montage est amovible de la portion de support, une position fermée dans laquelle la portion de montage est fixée par rapport à la portion de support, et une position d'appui dans laquelle la portion de montage peut tourner par rapport à la portion de support et n'est pas amovible de la portion de support, l'agencement de serrage (30) comprenant des première (34) et seconde (38) portions de serrage, et un mécanisme d'actionnement agencé entre les première (34) et seconde (38) portions de serrage, et actionnable pour déplacer les première (34) et seconde (38) portions de serrage entre la position ouverte, la position d'appui et la position fermée de l'agencement de serrage (30),
dans lequel le mécanisme d'actionnement inclut un premier actionneur (62) actionnable pour déplacer l'agencement de serrage (30) entre les positions ouvertes et d'appui, **caractérisé en ce que** le mécanisme d'actionnement comprend en outre un second actionneur (72) actionnable pour déplacer l'agencement de serrage (30) entre les positions d'appui et fermées, le second actionneur (72) étant adapté pour se déplacer dans une position verrouillée décentrée dans la position fermée.

2. Système (1) selon la revendication 1, dans lequel :
le premier actionneur (62) est attaché à la première portion de serrage (34) et peut tourner par rapport à la première portion de serrage (34) autour d'un premier axe ;
le mécanisme d'actionnement inclut une portion de montage d'actionneur (64) attachée à la seconde portion de serrage (38) et rotative autour de la seconde portion de serrage (38) autour d'un deuxième axe ;
le premier actionneur (62) est attaché à la portion de montage d'actionneur (64) et peut tourner autour de la portion de montage autour d'un troisième axe espacé du deuxième axe ;
le second actionneur (72) est attaché à la portion de montage d'actionneur (64) et peut tourner autour de la portion de montage autour d'un quatrième axe espacé du deuxième axe et du troisième axe,
dans lequel les premier et deuxième axes définissent une ligne de référence au travers de ceux-ci, et le troisième axe est sur un premier côté de la ligne de référence dans les positions ouvertes et d'appui, et sur un deuxième côté de la ligne de référence dans la position fermée, les premier et deuxième côtés étant sur des côtés opposés de la ligne de référence.

3. Système (1) selon la revendication 2, dans lequel le mécanisme d'actionnement comprend en outre un agencement de lien présentant un premier lien attaché de manière pivotante à la portion de montage, un deuxième lien raccordant de manière pivotante le premier lien à la première portion de serrage (34), et un troisième lien raccordant de manière pivotante le premier lien à la deuxième portion de serrage (38) de sorte que le mouvement d'une des première et seconde portions de serrage résulte en un mouvement sensiblement correspondant dans l'autre des première (34) et seconde portions de serrage (38).

4. Système (1) selon la revendication 3, dans lequel l'agencement de lien fournit un parallélogramme de Watt.

5. Système (1) selon l'une quelconque des revendications précédentes, dans lequel, dans la position ouverte, les premier (62) et second (72) actionneurs sont étendus, et dans lequel, dans la position d'appui, le premier actionneur (62) est au moins partiellement rétracté et le second actionneur (72) est étendu, et dans lequel, dans la position fermée, les premier (62) et second (72) actionneurs sont au moins partiellement rétractés.

6. Système (1) selon l'une quelconque des revendications précédentes, dans lequel le premier actionneur (62) est fourni par un dispositif de tige filetée, et le second actionneur (72) est fourni par un dispositif de vérin hydraulique.

7. Agencement de serrage (30) pour un système de génération de puissance sous-marin (1) qui inclut une unité de génération de puissance (4) et une structure de support (2), l'unité de génération de puissance (4) présentant une portion de montage qui est mise en prise de manière libérable avec une portion de support de la structure de support (2), ledit agencement de serrage (30) étant configuré pour serrer la portion de montage à la position de support, et présentant une position ouverte dans laquelle la portion de montage est amovible de la portion de support, une position fermée dans laquelle la portion de montage est fixée par rapport à la portion de support, et une position d'appui dans laquelle la portion de montage peut tourner par rapport à la portion de support et n'est pas amovible de la portion de support, ledit agencement de serrage (30) comprenant :
des première (34) et seconde (38) portions de serrage ; et
un mécanisme d'actionnement agencé entre les première (34) et seconde (38) portions de serrage, et actionnable pour déplacer les première (34) et seconde (38) portions de serrage entre une position ouverte, une position d'appui et une position fermée, et incluant un premier actionneur (62) actionnable pour déplacer l'agencement de serrage entre les positions ouvertes et d'appui, et un second actionneur (72) actionnable pour déplacer l'agencement de serrage entre les positions d'appui et fermées, le second actionneur (72) étant adapté pour se déplacer dans une position verrouillée décentrée dans la position fermée.

8. Agencement de serrage (30) selon la revendication 7, dans lequel :
le premier actionneur (62) est attaché à la première portion de serrage (34) et peut tourner par rapport à la première portion de serrage (34) autour d'un premier axe ;
le mécanisme d'actionnement inclut une portion de montage d'actionneur (64) attachée à la seconde portion de serrage (38) et rotative autour de la seconde portion de serrage (38) autour d'un deuxième axe ;
le premier actionneur (62) est attaché à la portion de montage d'actionneur (64) et peut tourner autour de la portion de montage autour d'un troisième axe espacé du deuxième axe ;
le second actionneur (72) est attaché à la portion de montage d'actionneur (64) et peut tourner autour de la portion de montage autour d'un quatrième axe espacé du deuxième axe et du troisième axe,
dans lequel les premier et deuxième axes définissent une ligne de référence au travers de ceux-ci, et le troisième axe est sur un premier côté de la ligne de référence dans les positions ouvertes et d'appui, et sur un second côté de la ligne de référence dans la position fermée, les premier et second côtés étant sur des côtés opposés de la ligne de référence.

9. Agencement de serrage (30) selon la revendication 8, dans lequel le mécanisme d'actionnement comprend en outre un agencement de lien présentant un premier lien adapté pour l'attache pivotante à une portion de montage d'une telle unité de génération de puissance (4), un deuxième lien raccordant de manière pivotante le premier lien à la première portion de serrage (34), et un troisième lien raccordant de manière pivotante le premier lien à la seconde portion de serrage (38) de sorte que le mouvement d'une des première (34) et seconde (38) portions de serrage résulte en un mouvement sensiblement correspondant dans l'autre des première (34) et seconde (38) portions de serrage.

10. Agencement de serrage (30) selon la revendication 9, dans lequel l'agencement de lien fournit un parallélogramme de Watt.

11. Agencement de serrage (30) selon l'une quelconque des revendications 8 à 10, dans lequel, dans la position ouverte, les premier (62) et second (72) actionneurs sont étendus, et dans lequel, dans la position d'appui, le premier actionneur (62) est au moins partiellement rétracté et le second actionneur (72) est étendu, et dans lequel, dans la position fermée, les premier (62) et second (72) actionneurs sont au moins partiellement rétractés.

12. Agencement de serrage (30) selon l'une quelconque des revendications 8 à 11, dans lequel le premier actionneur (62) est fourni par un dispositif de tige filetée, et le second actionneur (72) est fourni par un dispositif de vérin hydraulique.
